# FASCICULE DE BREVET EUROPEEN

(11) **EP 1 015 261 B1**
(45) Date de publication et mention de la délivrance du brevet: **11.09.2002**
(21) Numéro de dépôt: 98928298.3
(22) Date de dépôt: 20.05.1998
(51) Int. Cl.: B60C 11/12, B60C 11/11, B29C 33/42

(54) **SCULPTURE ET MOULE POUR BANDE DE ROULEMENT DE PNEUMATIQUE**
LAUFSTREIFENPROFIL UND -HERSTELLUNGSFORM FÜR LUFTREIFEN
TYRE TREAD PATTERN AND MOULD

(30) Priorité: 30.05.1997 FR 9706766
(43) Date de publication de la demande: 05.07.2000
(73) Titulaire: Compagnie Générale des Etablissements MICHELIN-MICHELIN & CIE, 63040 Clermont-Ferrand Cedex 09 (FR)
(72) Inventeur: LAGNIER, Alain, F-63540 Romagnat (FR); CHANET, Jean-Luc, F-63670 Le Cendre (FR); LAVIALLE, Georges, F-63160 Billom (FR)
(74) Mandataire: Diernaz, Christian
(86) Numéro de dépôt international: EP9802960
(87) Numéro de publication internationale: WO98054009

(56) Documents cités:
- EP-A- 0 378 090
- EP-A- 0 540 340
- DE-A- 2 024 279
- GB-A- 242 870
- GB-A- 474 588
- US-A- 1 733 064
- PATENT ABSTRACTS OF JAPAN vol. 015, no. 381 (M-1162), 26 septembre 1991 & JP 03 153406 A (TOYO TIRE & RUBBER CO LTD), 1 juillet 1991
- PATENT ABSTRACTS OF JAPAN vol. 014, no. 572 (M-1061), 19 décembre 1990 & JP 02 246810 A (BRIDGESTONE CORP), 2 octobre 1990
- PATENT ABSTRACTS OF JAPAN vol. 095, no. 011, 26 décembre 1995 & JP 07 215015 A (OHTSU TIRE & RUBBER CO LTD:THE), 15 août 1995

## Description

L'invention concerne une sculpture pour bande de roulement d'un pneumatique et plus particulièrement une sculpture évolutive avec l'usure de la bande; l'invention concerne également un moule destiné au moulage d'une telle sculpture évolutive.

Une bande de roulement d'un pneumatique est en règle générale constituée par au moins un élastomère et est pourvue d'une sculpture formée d'éléments en relief (comme des nervures ou des blocs) séparés les uns des autres dans le sens circonférentiel et/ou dans le sens transversal par des rainures dont les sections droites ont des largeurs typiquement supérieures à 2mm et des profondeurs au plus égales à l'épaisseur de la bande de roulement.

Le roulage d'un pneumatique sur de longues distances conduit à une usure progressive de la bande de roulement dudit pneumatique jusqu'à un niveau maximal d'usure déterminant ce que l'on nomme la durée de vie sur usure du pneumatique qui nécessite soit le remplacement du pneumatique soit la rénovation de sa bande de roulement par rechapage et mise en place d'une nouvelle bande.

Les éléments en relief d'une bande de roulement jouent un rôle fondamental en ce qui concerne l'adhércnce du pneumatique tant dans la direction transversale que dans la direction circonférentielle et tout particulièrement dans le cas d'un roulage sur sol mouillé et/ou enneigé. En effet, les arêtes des éléments de relief, en coupant le film d'eau présent à la surface de la route, permettent de maintenir la bande de roulement en contact avec la route; d'autre part, les rainures jouent le rôle de passages préférentiels pour évacuer l'eau dans ce cas.

L'obtention d'un bon niveau de performance d'une sculpture d'un pneumatique réside aussi dans l'adéquation entre ladite sculpture du pneumatique neuf et la rigidité de la bande de roulement. Par rigidité, on entend, entre autre, la rigidité de ladite bande lorsqu'elle est soumise à la fois à des efforts d'écrasement (efforts de compression) dans la région affectée par le contact avec la route par exemple et à des efforts tangentiels à ladite région (ces demiers efforts sont comparables à des efforts de cisaillement).

Pour une nature de mélange de caoutchouc donnée composant la bande de roulement, cette rigidité à l'écrasement et sous efforts de compression et de cisaillement dépend des dimensions des surfaces de contact des éléments de relief en contact avec le sol et de la hauteur desdits éléments, c'est à dire de la profondeur des rainures délimitant lesdits éléments. Les différentes performances d'usure, de comportement sur sol sec ou mouillé, d'adhérence d'une bande de roulement d'un pneumatique sont fortement dépendantes de la rigidité de cette bande dans la zone affectée par l'écrasement.

En outre, et pour augmenter le nombre d'arêtes de gomme au contact avec la route, il est souvent réalisé dans les éléments de relief un nombre plus ou moins grand d'incisions ou fentes dont la largeur est très inférieure à la largeur des rainures délimitant les éléments de relief. La largeur d'une incision, variable en fonction de la dimension du pneumatique considéré, est généralement inférieure à 2 mm. Les incisions ont en règle générale la même profondeur que les rainures mais elles peuvent aussi n'affecter que la partie superficielle de la bande de roulement de façon à ne pas trop diminuer la rigidité initiale de ladite bande et ainsi réaliser un compromis acceptable.

La présence d'un nombre plus ou moins important d'incisions modifie en proportion la rigidité des éléments de relief pourvus de telles incisions et en conséquence la rigidité de la bande de roulement s'en trouve plus ou moins affectée.

L'ensemble constitué par ces rainures circonférentielles et/ou transversales associées aux incisions réalisées dans les éléments de relief de la sculpture d'une bande de roulement confère au pneumatique neuf pourvu de ladite bande un niveau de performance tout à fait satisfaisant pour l'utilisateur et cela quelque soit le type de routes et/ou les conditions climatiques rencontrées.

Toutefois, la diminution de l'épaisseur de bande de roulement résultant de l'usure progressive du pneumatique conduit à une réduction de la profondeur des rainures et donc à une réduction de la hauteur des éléments de relief. De plus, cette diminution de la hauteur des éléments de relief se traduit par une augmentation de la rigidité chaque élément et par conséquent de ladite bande. Associée à cette usure, on constate en général une perte d'efficacité de la sculpture après une fraction plus ou moins grande de la vie du pneumatique. Pour en tenir compte, il peut être prévu de réaliser un compromis sur le pneumatique à l'état neuf en le dotant d'une sculpture dont le point optimum de fonctionnement n'est atteint qu'après un niveau d'usure de sa bande de roulement.

Un autre moyen permettant d'obtenir un fonctionnement satisfaisant sur le pneumatique neuf et après une usure déterminée de la bande de roulement consiste, comme décrit dans le brevet EP 0 378 090 correspondant au préambule de la revendication 1, à pourvoir la bande de roulement d'un pneumatique neuf d'une pluralité d'incisions présentant en section droite un tracé, formé d'une première partie rectiligne s'étendant radialement à l'intérieur du pneumatique sur une profondeur comprise entre 35% et 55% de la profondeur totale du tracé, cette première partie se divisant en au moins deux branches s'étendant radialement à l'intérieur du pneumatique sur la profondeur restante de façon à ce que le nombre d'incisions soit multiplié par un coefficient au moins égal à 1,5 à partir de l'extrémité intérieure de la première partie rectiligne du tracé.

Cette solution bien que procurant de bons résultats n'est cependant pas totalement satisfaisante. En effet, l'usure de la bande de roulement entraînant une réduction du volume déterminé par les rainures et éventuellement les incisions s'il y en a, il s'ensuit une diminution capacité des rainures à évacuer l'eau présente sur la route dans le cas d'un roulage sur route mouillée. Pour supprimer cet inconvénient, il est connu, par exemple dans le domaine des pneumatiques poids-lourd, de régénérer la sculpture, après usure partielle de la bande de roulement, en enlevant de la matière pour former de nouvelles rainures selon un tracé préétabli.Le problème à la base de l'invention est de réaliser une sculpture d'une bande de roulement d'un pneumatique qui soit optimisée du point de vue des performances d'adhérence et de comportement (c'est à dire assurant une parfaite maîtrise de la tenue de route d'un véhicule équipé avec des pneumatiques pourvus de ladite sculpture) que ce soit à l'état initial et en cours de vie du pneumatique sans que cela nuise à la performance dudit pneumatique en durée de vie sur usure.

Un autre objectif de l'invention est de fournir une sculpture conférant à une bande de roulement une rigidité dans la région affectée par le contact qui soit adaptée en fonction des états d'usure successifs de ladite bande.

Conformément à l'invention, il est proposé une bande de roulement d'épaisseur E pour pneumatique, ladite bande présentant une surface de roulement, limitée transversalement par des bords latéraux, ladite bande étant pourvue à l'état neuf d'une sculpture comportant au moins une pluralité de blocs de gomme disposés circonférentiellement sur au moins un de ses bords latéraux, lesdits blocs de gomme étant séparés les uns des autres par des rainures orientées quasiment transversalement et séparés des motifs de sculpture situés axialement à l'intérieur par des rainures orientées principalement circonférentiellement, la bande de roulement étant caractérisée en ce qu'elle comporte sur au moins un de ses bords comportant une pluralité de blocs de gomme à l'état neuf et radialement à l'intérieur de chacun desdits blocs :
- au moins un canal de largeur moyenne au moins égale à la largeur des rainures transversales, chaque canal ayant un tracé moyen identique au tracé moyen desdites rainures transversales et étant destiné à former une rainure débouchant radialement vers l'extérieur de la bande de roulement après une usure de la bande de roulement comprise entre 15% et 45% de l'épaisseur E de ladite bande, chaque canal s'étendant dans l'épaisseur restante de la bande, et
- au moins une incision, de largeur faible devant la largeur moyenne de chaque canal, ayant, en projection radiale sur la surface de roulement de la bande à l'état neuf, une orientation moyenne transversale identique ou quasiment identique à celle du/des canal (canaux) projeté(s) sur la même surface, chaque incision débouchant radialement à la surface de roulement au plus tard au moment de l'apparition d'un canal sur ladite surface de roulement et s'étendant, dans l'épaisseur de la bande, sur toute la profondeur du (des) canal (canaux) adjacent(s) sur un même niveau dans l'épaisseur de la bande de roulement.

Il est judicieux que les canaux, destinés à former de nouvelles rainures, s'étendent en profondeur au moins jusqu'au niveau maximal d'usure de la bande de roulement, de façon à conserver un bon drainage pendant toute la durée d'utilisation du pneumatique pourvu d'une bande de roulement selon l'invention.

Un autre objet de l'invention est de proposer un moule de fabrication d'un pneumatique pour mouler une telle bande de roulement, ledit moule permettant dans un premier temps de mouler une pluralité de motifs situés radialement sous la surface de roulement de ladite bande et s'étendant dans une direction sensiblement transversale, et dans un second temps de démouler le pneumatique en utilisant les efforts exercés par la matière composant la bande sur ledit moule, de façon à réduire l'effort global de démoulage et à faciliter celui-ci.

De manière habituelle, un moule de pneumatique comprend plusieurs parties qui une fois assemblées délimitent une surface de moulage correspondant à la surface externe du pneumatique à mouler. Un type de moule connu comprend une partie formant une couronne et destinée à mouler la bande de roulement d'un pneumatique et deux parties formant des coquilles destinées à mouler les flancs dudit pneumatique. La couronne moulant la bande de roulement est composée d'une pluralité de secteurs, chaque secteur, pouvant être déplacé selon une direction de moulage/démoulage sensiblement radiale, est pourvu d'une garniture de moulage composée d'une pluralité d'éléments en relief pour mouler des motifs dans ladite bande. Selon cette technique connue, les éléments en relief doivent avoir des géométries qui permettent le démoulage après vulcanisation du pneumatique, c'est-à-dire l'extraction desdits éléments de la bande de roulement. En conséquence, des éléments en relief ayant des parties en contre-dépouille sont difficilement démoulables selon cette technique. De même, cette technique ne permet pas de mouler des motifs ne débouchant pas sur la surface de la bande de roulement à l'état neuf.

Pour mouler des canaux sous la surface de roulement de la bande de roulement d'un pneumatique neuf, il est connu, en particulier dans le document US 1,733,064, de réaliser une pluralité de trous dans une coquille d'un moule de pneumatique de manière à permettre l'introduction d'aiguilles à l'intérieur de la gomme composant la bande de roulement d'un pneumatique après avoir moulé ce dernier. Il est en outre prévu des moyens externes audit moule pour forcer lesdites aiguilles à pénétrer dans la gomme; ces mêmes moyens servant ensuite à faire ressortir les aiguilles avant de procéder au démoulage du pneumatique par ouverture des différentes pièces constituant le moule. Ce moule est particulièrement complexe à réaliser et nécessite de percer au moins une coquille; dans le cas d'une modification, par exemple du nombre d'aiguilles, il est nécessaire de refaire une autre coquille, ce qui est coûteux. En outre, la présence de trous sur la coquille entraîne une plus ou moins grande pénétration de la gomme dans ceux-ci, ce qui se traduit après moulage par la présence de défauts de moulage sur les flancs du pneumatique.

Pour résoudre les problèmes mentionnés ci-dessus, il est proposé un moule de moulage d'un pneumatique pourvu d'une bande de roulement se prolongeant axialement par des flancs jusqu'aux zones de bourrelet, ledit moule comportant deux coquilles pourvues de surfaces de moulage pour mouler chacune un flanc de pneumatique et une structure formant une couronne concentrique aux deux coquilles pour mouler la bande de roulement du pneumatique. La couronne et les coquilles composant le moule selon l'invention sont, dans la position de fermeture du moule, en contact par leurs extrémités latérales de façon à délimiter la surface totale de moulage d'un pneumatique.

Le moule selon l'invention est caractérisé en ce que :
- au moins une coquille est formée d'au moins deux parties de coquille annulaires et concentriques les unes par rapport aux autres de façon que les surfaces de moulage desdites parties soient, dans la configuration de moulage, dans le prolongement l'une de l'autre pour mouler la totalité d'un flanc,
- au moins une des parties de coquille est pourvue d'au moins une pluralité d'éléments de relief faisant saillie sur la surface de moulage de ladite partie de coquille, lesdits éléments de relief d'une même partie de coquille ayant quasiment la même géométrie et la même orientation définie comme la direction entre le point d'ancrage d'un élément sur la partie de coquille et l'extrémité dudit élément axialement la plus à l'extérieur de ladite partie de coquille,
- chacune des parties de coquille portant des éléments de relief est montée mobile dans la direction circonférentielle par rapport aux autres parties de la même coquille, de façon à permettre la rotation de chacune desdites parties par rapport aux autres parties de la même coquille au moins sous l'action des efforts exercés par les mélanges de caoutchouc sur les éléments de relief pendant le démoulage, dans le but de faciliter le démoulage du pneumatique.

De cette façon, il est possible de réduire les efforts nécessaires pour démouler les éléments de relief portés par chaque partie de coquille, puisque sous l'action des efforts de réaction produits par les mélanges de caoutchouc vulcanisés pendant le démoulage sur lesdits éléments, chaque partie va tourner par rapport aux autres parties de la même coquille.

Un moule selon l'invention permet, de manière aisée, la réalisation de moulages et démoulages de pneumatiques comportant des motifs de sculpture débouchant sur au moins un bord de la bande de roulement lesdits motifs présentant une orientation globalement différente de la direction transversale du pneumatique. Le moule selon l'invention permet également de mouler des motifs de sculpture avec des éléments de relief ayant des géométries fortement non démoulables (c'est à dire des géométries telles que le moulage dans une matière non déformable élastiquement ne peut pas être suivi d'un démoulage sans dégradation soit des éléments de relief soit de la matière moulée)

Un moule selon l'invention peut comporter au moins une coquille formée par l'assemblage de plusieurs parties annulaires et concentriques les unes aux autres et dont au moins deux desdites parties sont mobiles circonférentiellement par rapport à une partie fixe de ladite coquille pour permettre, par exemple, la réalisation de plusieurs niveaux de sculpture dans une bande de roulement (disposition particulièrement intéressante dans le cas de pneumatiques pour poids-lourd ayant des bandes de roulement d'épaisseur relativement plus importante que celles des pneumatiques de tourisme). De manière avantageuse, les parties de coquille portant des éléments de relief sont mobiles d'une manière indépendante les unes des autres.

L'invention qui vient d'être exposée sera mieux comprise à l'aide des figures suivantes ayant trait à plusieurs variantes de sculptures et à un moule pour mouler lesdites sculptures; les exemples de sculptures présentées ici le sont uniquement à titre d'illustration de l'invention et ne sauraient être considérés comme limitatifs :
- la figure 1 représente, à l'état neuf, la vue en plan de la surface de roulement d'une sculpture selon l'invention;
- la figure 2 montre la nouvelle surface de roulement de la sculpture de la figure 1 après une usure partielle de la bande de roulement;
- la figure 3-A représente la vue selon la coupe A- A de la bande de roulement dont la surface de roulement à l'état neuf est montrée à la figure 1;
- la figure 3-B représente la vue selon la coupe B- B de la bande de roulement dont la surface de roulement est montrée à la figure 2 après usure;
- la figure 4 représente une vue en coupe d'un bloc de gomme d'une bande de roulement pourvue d'une sculpture selon l'invention;
- les figures 5 à 9 représentent, vue en coupe, cinq variantes possibles d'un bloc de gomme d'une bande de roulement pourvue d'une sculpture selon l'invention;
- la figure 10 représente une coupe radiale d'un moule de moulage d'un pneumatique dont les coquilles, destinées à mouler les flancs dudit pneumatique, comportent une partie mobile circonférentiellement;
- la figure 11 montre un élément moulant comportant trois doigts et destiné à équiper les parties mobiles des coquilles représentées sur la figure 10 pour mouler un canal et deux incisions situés radialement sous la surface de roulement d'un pneumatique neuf;
- la figure 12 montre une coupe selon C-C de l'élément moulant de la figure 11.

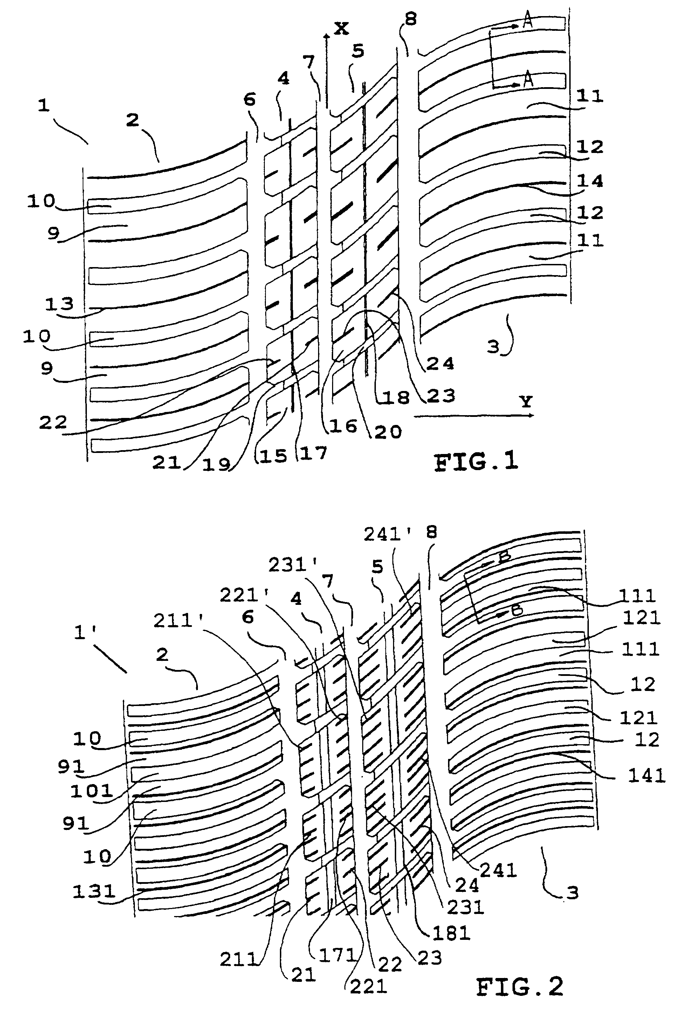

On a représenté sur la figure 1 une partie d'une sculpture évolutive d'une bande de roulement d'épaisseur E destinée à être disposée radialement à l'extérieur de l'armature de renforcement du sommet d'un pneumatique. Dans le cas d'espèce, l'épaisseur E de ladite bande est égale à la distance radiale séparant la surface de roulement à l'état neuf de la surface radialement le plus à l'extérieur de l'armature de renforcement du sommet du pneumatique.

Par sculpture évolutive, on entend une sculpture dont la surface de roulement, destinée à être en contact avec la route, évolue avec l'usure de ladite bande résultant du roulage du pneumatique, l'évolution étant prédéterminée au moment de la conception dudit pneumatique de manière à obtenir, quelque soit le degré d'usure de la bande de roulement, des performances d'adhérence et de comportement routier qui restent sensiblement inchangées pendant toute la durée d'utilisation du pneumatique.

La sculpture à l'état neuf dont on a représenté la surface de roulement 1 à la figure 1 se compose de deux rangées de blocs bord 2, 3 encadrant deux rangées de blocs intermédiaires 4, 5, lesdites rangées étant disposées dans la direction circonférentielle du pneumatique (selon la flèche X) et étant séparées les unes des autres par des rainures circonférentielles de tracé rectiligne 6, 7, 8. La rainure intermédiaire 7 est légèrement désaxée dans le sens transversal (repéré par la flèche Y qui se confond avec l'axe de rotation du pneumatique) de façon à diviser la bande de roulement en deux parties de largeurs inégales, les blocs de gomme de la rangée intermédiaire 5 ayant une dimension dans le sens transversal sensiblement plus grande que celle des blocs de la rangée intermédiaire 4.

Les blocs de mélange caoutchoutique 9, 11 des rangées 2,3 situées sur les bords de la bande de roulement sont séparés les uns des autres dans le sens circonférentiel par des rainures 10, 12 de tracé moyen courbe et d'orientation oblique, c'est à dire faisant un angle moyen voisin de 15° avec la direction transversale (représentée par la flèche Y). Ces rainures 10. 12 ont des tracés moyens dont les courbures sont de signes opposés, et lesdites rainures ont des largeurs moyennes à la surface de roulement du pneumatique neuf comprises entre 4 et 6 mm.

Par tracé moyen d'une rainure ou d'une incision débouchant sur une surface de roulement, on entend le profil, construit sur ladite surface, équidistant des tracés des bords de la rainure ou de l'incision sur la même surface. On entend par orientation d'une rainure ou d'une incision sur la même surface, la direction que fait l'intersection avec ladite surface d'un plan passant par les points les plus éloignés axialement du tracé moyen de ladite rainure ou incision sur la même surface.

En outre chacun des blocs 9, 11 situés sur les bords de la bande de roulement du pneumatique est pourvu d'une incision 13, 14 de largeur égale à 2 mm dont la trace moyenne à la surface de roulement du pneumatique neuf est sensiblement parallèle au tracé moyen des rainures délimitant lesdits blocs, chacune desdites incisions divisant la surface de contact de chaque bloc, à l'état neuf, en deux parties d'aires quasiment égales.

Les blocs 15, 16 formant les deux rangées intermédiaires 4, 5 situées entre les rangées des bords de la bande de roulement sont séparés circonférentiellement les uns des autres par des rainures 19, 20 d'orientation oblique et sont pourvus d'une incision circonférentielle 17, 18 débouchant sur toute la surface de contact desdits blocs et partageant lesdits blocs en deux parties d'aires sensiblement égales. Chacune desdites incisions 17, 18 se prolonge radialement à l'intérieur de la bande de roulement par un canal de largeur 3 mm de façon à laisser apparaître une rainure circonférentielle 171, 181 après usure partielle (comme cela est visible sur la figure 2).

Il est en outre prévu, sur chacun des blocs 15, 16 et de part et d'autre des incisions circonférentielles 17, 18, deux incisions 21, 22 et 23, 24 d'orientation oblique ne débouchant que sur un côté desdits blocs dans une rainure circonférentielle (ces deux incisions d'orientation oblique ont des tracés moyens, sur la surface de roulement 1, sensiblement parallèles aux tracés moyens des rainures 19 et 20 séparant circonférentiellement les blocs 15, 16). Sur certains des blocs 15 et 16, ces incisions 21, 22 et 23, 24 présentent la particularité d'avoir, vu en section droite, des formes en Y à deux branches de façon à former, après usure partielle de la bande de roulement, deux nouvelles incisions 211, 221 et 231, 241 comme cela est représenté sur la figure 2.

La figure 2 montre la nouvelle surface de roulement 1' de la même bande de roulement après une usure affectant la totalité de la largeur axiale de ladite bande et légèrement supérieure à 20% de l'épaisseur E de ladite bande.

Cette bande de roulement présente une surface de roulement 1' correspondant à une nouvelle sculpture comportant sur chaque rangée bord 2, 3 un nombre de blocs 91, 111 qui a doublé par rapport au nombre de blocs apparents à la surface de roulement du pneumatique neuf. Ces nouveaux blocs sont séparés circonférentiellement les uns des autres par les rainures initiales 10, 12 et par de nouvelles rainures 101, 121 apparues à la nouvelle surface de roulement du pneumatique, lesdites nouvelles rainures ayant des tracés moyens identiques à ceux des rainures initiales 10, 12 et une largeur moyenne sensiblement égale à la largeur des rainures 10, 12 débouchant sur la surface de roulement à l'état neuf. De plus, chaque bloc nouvellement formé est pourvu d'une incision 131, 141 dont le tracé moyen est identique à celui des nouvelles rainures 101,121. La présence de ces incisions combinée avec les nouvelles rainures formées permet d'obtenir une souplesse appropriée des blocs de gomme après usure partielle.

Il est, en outre, prévu, sur tous les blocs des rangées intermédiaires 4, 5 et au voisinage des bords d'attaque et de fuite desdits blocs, deux incisions supplémentaires 211', 221' et 231', 241' débouchant radialement à la surface de roulement après usure partielle de la bande de roulement, chacune desdites incisions communiquant avec une rainure circonférentielle délimitant transversalement chacun desdits blocs.

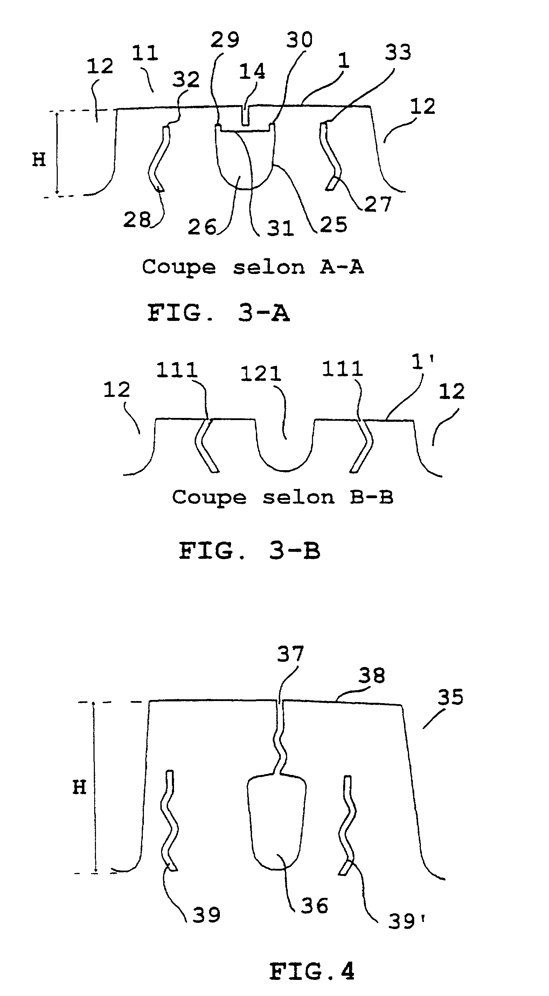

La vue en coupe de la figure 3-A montre partiellement l'épaisseur de la bande de roulement selon la coupe A-A réalisée sur un bloc de gomme 11 de la rangée 3 du bord de ladite bande neuve représentée sur la figure 1.

Sur cette coupe, réalisée selon un plan perpendiculaire à la direction axiale Y, on distingue un bloc 11 délimité, à l'état neuf, par deux rainures 12, de profondeur H (avec H inférieur à l'épaisseur E de la bande de roulement) orientées sensiblement transversalement et pourvu d'une incision 14 débouchant sur la surface de roulement 1 du pneumatique neuf, ladite incision 14 s'étendant radialement sur une profondeur d'environ 15% de l'épaisseur E de la bande de roulement à l'état neuf. Sous la surface de roulement 1 de la bande de roulement neuve, trois cavités formant des canaux ont été moulées dont une première cavité 26 en forme de U fermé avec de part et d'autre de cette première cavité, deux cavités 27, 28 formant chacune une incision de faible largeur devant la largeur moyenne de la cavité 26 et dont le tracé suit une ligne brisée dans le sens de l'épaisseur de la bande. L'incision 14 débouchant à la surface de roulement du pneumatique neuf n'est pas, dans le cas d'espèce, reliée à la cavité de section transversale en forme de U, mais elle pourrait l'être (voir l'exemple de la figure 4).

La cavité centrale 26 ainsi que les deux cavités 27, 28 situées radialement sous la surface de roulement 1 de la bande de roulement neuve sont destinées après une usure partielle de ladite bande comprise entre 15% et 45% de l'épaisseur E à former une nouvelle sculpture dont les caractéristiques sont adaptées à l'épaisseur réduite de la bande de roulement..

De manière avantageuse, le contour 25 de la section droite de la cavité 26 comporte, au voisinage de la surface de roulement 1 du pneumatique neuf, au moins deux petites parties de contour 29, 30 séparées par une partie de contour 31 radialement légèrement plus éloignée de la surface de roulement 1 du pneumatique neuf que lesdites petites parties de contour, de façon à ce que, après une usure partielle de la bande de roulement, les petites parties de contour 29, 30 débouchent radialement sur la nouvelle surface de roulement et qu'ainsi soit obtenue une ouverture complète plus rapide de la largeur totale de la rainure 26 sur ladite nouvelle surface de roulement. Préférentiellement, les parties de contour 29, 30 sont séparées par une distance au moins égale à la moitié de la largeur maximale du canal 26.

Les cavités 27, 28 de part et d'autre de la cavité centrale 26 sont réalisées dans l'épaisseur E de la bande de roulement de façon à ce que les points de leurs contours respectifs 32, 33 les plus près de la surface de roulement 1 du pneumatique neuf soient, au plus, situés à une profondeur égale à la profondeur des points du canal 26 les plus proches de ladite surface de roulement, pour déboucher sur la surface de roulement obtenue après usure partielle et être actives au plus tard quand la nouvelle rainure est formée sur ladite nouvelle surface. Comme cela est visible sur la figure 3-A, les cavités 27 et 28 s'étendent radialement jusqu'au point de plus grande profondeur de la cavité centrale 26, de manière à être actives jusqu'au niveau d'usure maximale de la bande de roulement.

Après usure, et comme cela est montré sur la figure 3-B, la cavité centrale 26 et les cavités 27, 28 débouchent radialement sur la nouvelle surface de roulement 1' pour former une nouvelle rainure 121 et deux nouvelles incisions 111 reliant transversalement l'extérieur de la bande de roulement à la rainure circonférentielle 8 délimitant les blocs 3 du bord de ladite bande.

Ainsi, la combinaison d'une nouvelle rainure et de deux incisions radialement à l'intérieur de chaque bloc de gomme des bords de la bande de roulement permet de réaliser une sculpture qui conserve avec l'usure à la fois un bon pouvoir de drainage (lié au volume représenté par l'ensemble des rainures transversales), une bonne performance d'adhérence (augmentation du nombre d'arêtes de gomme avec l'usure) et de comportement sur route (adaptation régulière de la rigidité de la bande de roulement à la fois par la modification de forme des blocs et par le nombre d'incisions).

Un pneumatique de dimension 175/70 R 13 a été réalisé avec une bande de roulement pourvue d'une sculpture évolutive correspondant à la sculpture représentée par les figures 1 et 2. A l'état neuf, la bande de roulement a une épaisseur de 8,5 mm et une largeur de 125 mm; le taux d'entaillement surfacique à l'état neuf est de l'ordre de 27% (le taux d'entaillement surfacique est défini comme le nombre obtenu en faisant le rapport entre la différence entre l'aire totale de l'empreinte de contact et l'aire de contact des éléments de la sculpture avec la route et l'aire totale de l'empreinte de contact). Les rainures débouchant sur la surface de roulement à l'état neuf ont des largeurs moyennes comprises entre 4 et 6 mm.

Le pneumatique pourvu d'une bande de roulement dotée de la sculpture évolutive décrite est bien adapté au besoin des utilisateurs et cela quel que soit le niveau d'usure dudit pneumatique puisqu'après une usure d'environ 2,5 mm de la bande de roulement, les cavités radialement sous la surface de roulement à l'état neuf débouchent sur la nouvelle surface de roulement pour faire en sorte que le taux d'entaillement volumique soit maintenu quasiment constant et égal au taux d'entaillement volumique à l'état neuf. Par entaillement volumique, on entend une mesure de la capacité de la sculpture à évacuer un volume total de liquide.

La figure 4 montre une variante de la sculpture précédemment décrite à l'état neuf, dans laquelle un bloc 35 est, vu en coupe, délimité par des rainures de profondeur H (H<E) et est pourvu d'un canal 36 situé radialement à l'intérieur et en position centrale par rapport audit bloc. Ce canal 36 a sensiblement la forme d'un O et communique avec une incision 37 dont le tracé suit, dans l'épaisseur de la bande de roulement, une succession de lignes brisées, ladite incision 37 débouchant sur la surface de roulement à l'état neuf. Deux incisions 39, 39' de tracé ondulé suivant l'épaisseur sont réalisées de part et d'autre du canal 36 et sont prévues pour être actives sur la surface de roulement dès lors que le canal 36 a débouché sur la surface de roulement après une usure partielle de la bande de roulement et au moins jusqu'à usure maximale prévue de la bande de roulement.

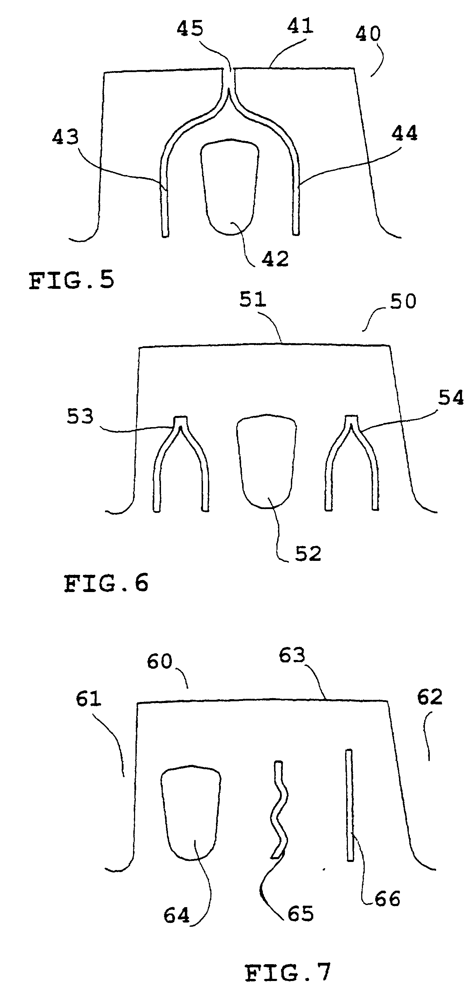

D'autres variantes de sculptures évolutives conformes à l'invention sont représentées sur les figures 5 à 9, dans lesquelles sont présentées des coupes, réalisées selon des plans perpendiculaires à l'axe de rotation du pneumatique, de blocs de gomme comportant des canaux et incisions radialement sous la surface de roulement à l'état neuf. Par coupe transversale, on entend une coupe selon un plan perpendiculaire à l'axe de rotation dudit pneumatique.

La figure 5 montre une coupe d'un bloc de gomme 40 comportant radialement sous la surface de roulement 41 à l'état neuf, un canal 42 dont la section droite a la forme d'un O encadré par les deux branches 43, 44 d'une incision 45 ayant la forme générale d'un Y, ladite incision débouchant sur la surface de roulement 41 de la bande de roulement à l'état neuf.

La figure 6 montre une coupe d'un bloc de gomme 50 comportant radialement sous la surface de roulement 51 à l'état neuf, un canal 52 dont la section droite a la forme d'un O, encadré par deux cavités 53, 54 ayant chacune la forme générale d'un Y, lesdites incisions ne débouchant sur la surface de roulement qu'après usure partielle du bloc 50 (et comme c'est le cas du canal 52).

La figure 7 montre une coupe d'un bloc de gomme 60 délimité circonférentiellement par deux rainures 61, 62 et comportant radialement sous la surface de roulement 63 à l'état neuf, un canal 64 dont la section droite a sensiblement la forme d'un O. Ce canal est préférentiellement placé dans le bloc 60 dans une position désaxée par rapport au plan médian dudit bloc, de façon à créer après usure partielle dudit bloc deux nouveaux blocs dont les largeurs mesurées dans le sens circonférentiel sont différentes. Sur la partie étroite peu rigide, entre la rainure 61 et le canal 64, il n'est prévu aucune incision supplémentaire, tandis que sur la partie large, entre le canal 64 et la rainure 62, il est prévu deux incisions 65, 66 dont une est rectiligne et l'autre présente dans le sens radial un tracé formé d'une succession d'ondulations, pour créer après usure partielle deux nouvelles incisions permettant d'ajuster la rigidité de ladite partie large.

De manière avantageuse, il peut être prévu au moins deux évolutions différentes et successives de la sculpture d'une bande de roulement correspondant respectivement chacune à un niveau d'usure prédéterminé. On arrive ainsi à adapter au mieux le fonctionnement de la bande de roulement pendant toute la durée d'utilisation du pneumatique, en particulier pour des bandes de roulement épaisses (comme c'est le cas pour les pneumatiques destinés aux véhicules poids lourd).

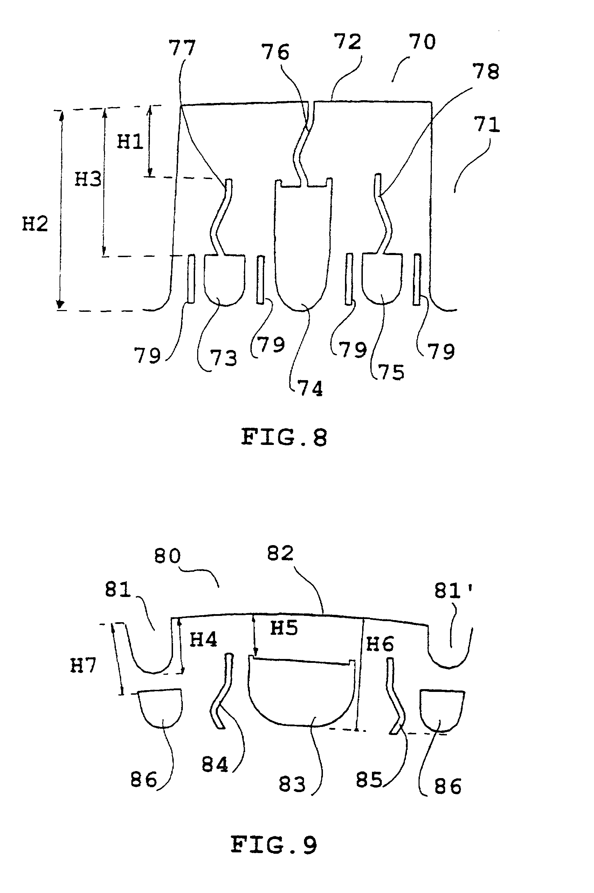

Un exemple d'une telle sculpture est représentée à la figure 8 qui montre une coupe d'un bloc de gomme 70 comportant radialement sous la surface de roulement 72 à l'état neuf, trois canaux. Un canal 74 dont la section droite de largeur sensiblement constante a une forme allongée occupe la position médiane dans le bloc 70 et a un contour qui s'étend radialement entre une profondeur H1 et une profondeur H2; le canal médian 74 se prolonge radialement jusque sous la surface de roulement 72 à l'état neuf par une incision 76 suivant un tracé en zigzag. De chaque côté du canal médian 74 sont réalisés deux canaux latéraux 73, 75 ayant des contours de même largeur et s'étendant entre une profondeur H3 (supérieure strictement à H1) et la profondeur H2 (par convention, toutes les profondeurs sont mesurées radialement par rapport à la surface de roulement 72 à l'état neuf, c'est-à-dire perpendiculairement à ladite surface). Ces canaux latéraux 73, 75 se prolongent radialement jusqu'à la profondeur H1 par des incisions 77, 78 dont la trace dans le sens de l'épaisseur du bloc 70 est formée de lignes brisées. En outre, il est prévu dans les parties de gomme entre les canaux 73, 74, 75 plusieurs incisions rectilignes 79 qui s'étendent entre les profondeurs H3 et H2.

Le bloc de gomme 70 de la figure 8 présente la particularité d'avoir pour deux niveaux d'usure distincts (correspondant respectivement aux profondeurs H1 et H3, avec 0,15*H2<H1< 0,45*H2 et H3>H1, H2 correspondant à la profondeur des rainures 71 délimitant le bloc 70 et H2<E) deux nouvelles sculptures différentes. En effet, entre les profondeurs H1 et H3, il se forme à la surface de roulement une rainure correspondant au canal médian 74 et divisant le bloc initial en deux blocs, chaque nouveau bloc étant pourvu d'une incision. Entre H3 et H2, les canaux latéraux 73, 75 débouchent sur la nouvelle surface de roulement pour diviser à nouveau les blocs formés à partir de la profondeur H1 en deux nouveaux blocs et former de nouvelles rainures dont les tracés moyens, sur la nouvelle surface de roulement, sont semblables aux tracés des rainures 71 sur la surface de roulement à l'état neuf.

Une autre façon d'obtenir une bande de roulement présentant plusieurs nouvelles sculptures différentes pour des niveaux d'usure distincts, est représentée à la figure 9. Sur cette figure, un bloc 80 est montré en coupe et est délimité circonférentiellement par deux rainures 81, 81' de même profondeur H4 mesurée par rapport à la surface de roulement du pneumatique neuf. Ce bloc comporte, radialement sous sa surface de roulement 82 à l'état neuf, un canal 83 dont le contour s'étend entre une profondeur H5 et une profondeur H6 (H6 < E), de façon que : H5 < H4 < H6 et de part et d'autre dudit canal deux incisions 84, 85 s'étendant sensiblement entre les mêmes profondeurs que ledit canal 83. D'autre part, il est prévu, radialement sous chaque rainure 81, 81' délimitant le bloc 80, un canal 86 dont le contour s'étend entre une profondeur H7 et la profondeur H6. Ainsi, après une usure partielle du bloc 80 sur une profondeur H5 (H5<H4), il apparaît une nouvelle rainure formée par le canal 83 et divisant ledit bloc en deux blocs. Puis, après une usure supérieure à la profondeur H4, les rainures 81, 81' délimitant le bloc à l'état neuf, disparaissent; enfin, quand l'usure est supérieure à la profondeur H7, les canaux 86 situés radialement sous les rainures 81, 81' apparaissent sur la surface de roulement pour former deux nouvelles rainures. Cette disposition permet d'obtenir une grande rigidité de la bande de roulement à l'état neuf tout en conservant un volume de drainage de liquide suffisant.

De manière préférentielle, le canal 83, présent dans la partie médiane du bloc 80, a, vu en coupe, une largeur supérieure d'au moins 50% à la largeur des rainures 81, 81' délimitant le bloc à l'état neuf, de façon à conserver un volume de drainage suffisant, et cela même quand les rainures initiales ont disparu.

Par volume de drainage d'une rainure, on entend une mesure du volume occupé par ladite rainure, correspondant environ au produit de la surface de sa section droite par sa longueur.

Les exemples de canaux et d'incisions réalisés sous la surface de roulement des blocs situés au bord d'une bande de roulement et qui viennent d'être décrits, peuvent également être réalisés dans le cas de sculptures de bande de roulement comportant, sur les bords et à l'état neuf, une bande continue de gomme formant une nervure. Après usure partielle de la bande de roulement, ladite bande continue présente une succession de blocs de gomme séparés les uns des autres par des rainures, chaque bloc ayant en outre au moins une incision dont le tracé moyen sur la surface de roulement est voisin de celui desdites rainures.

Avantageusement, il est intéressant de prévoir que les orientations des tracés moyens des rainures apparaissant après usure soient opposées (= symétriques par rapport à un axe parallèle à la direction transversale) aux orientations des tracés moyens des rainures débouchant sur la surface de roulement du pneumatique neuf, de façon à éviter toute initiation d'usure irrégulière et ainsi augmenter la durée de vie du pneumatique.

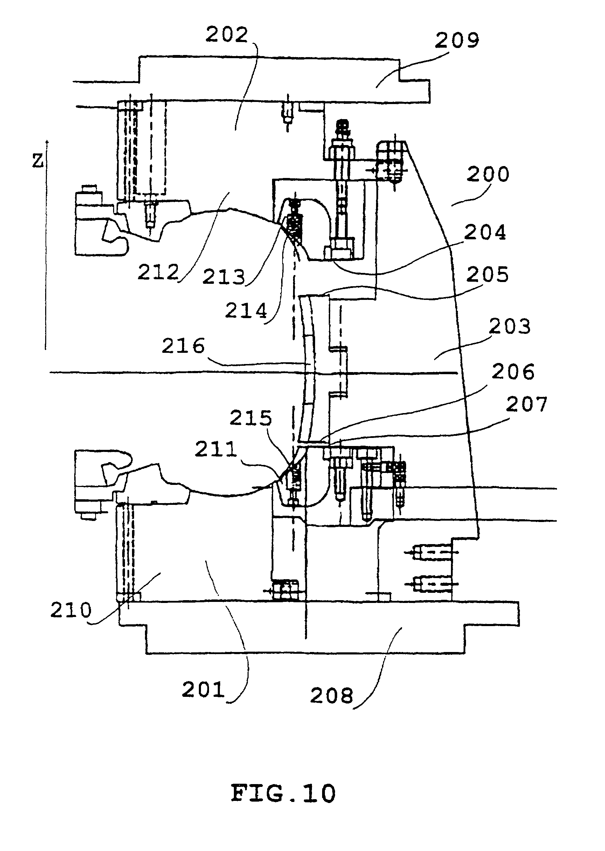

La figure 10 représente une coupe d'un moule 200 pour mouler un pneumatique, ledit moule étant en position d'ouverture et placé en position horizontale de manière à ce que l'axe de rotation du pneumatique soit vertical (parallèle à la direction repérée par la flèche Z). Le moule 200 comporte une coquille inférieure 201 et une coquille 202 supérieure pour mouler les flancs dudit pneumatique et, intercalé entre lesdites deux coquilles, un élément intermédiaire formant une couronne 203 pour le moulage des motifs de sculpture de la bande de roulement dudit pneumatique. En position de moulage, et de manière connue, les différents éléments constitutifs du moule sont en contact par leurs extrémités latérales 204, 205 et 206, 207 de manière à obtenir un volume de moulage limité par une surface de moulage constituée par la réunion des surfaces de moulage des coquilles et de la couronne sommet.

Par définition, une coquille correspond à une partie moulant la surface extérieure du pneumatique prolongeant la surface de roulement de la bande de roulement et s'étendant jusqu'à la région du bourrelet dudit pneumatique.

La coquille inférieure 201 est maintenue solidaire d'une base fixe 208 par des moyens de fixation appropriés (non décrits ici), tandis que la coquille supérieure 202 est solidaire d'un plateau mobile 209 suivant une direction (figurée par la flèche Z) perpendiculaire au plan médian du moule coïncidant avec le plan équatorial de l'ébauche de pneumatique en place dans ledit moule.

La couronne 203 moulant la bande de roulement du pneumatique comporte une pluralité de secteurs en contact deux à deux dans le sens circonférentiel, chacun desdits secteurs comportant un support et une garniture de moulage 216 pour mouler les motifs de sculpture débouchant sur la surface de roulement du pneumatique neuf, ladite garniture étant fixée radialement à l'intérieur du support par des moyens de fixation appropriés. En outre, des moyens sont prévus pour déplacer radialement les secteurs de façon à former la couronne de moulage de la bande de roulement, les mêmes moyens servant à déplacer les mêmes secteurs en direction opposée de manière à ouvrir le moule pour en extraire le pneumatique après moulage.

Les coquilles 201, 202 sont formées par l'assemblage d'une première et d'une deuxième parties annulaires et concentriques respectivement 210, 211 et 212, 213. Chaque première partie de coquille 211, 213 est disposée de manière à être située entre une deuxième partie de coquille 210, respectivement 212, et la couronne sommet 203 en position de moulage. Les deux parties composant une même coquille sont disposées de manière à ce que leurs surfaces de moulage soient dans le prolongement l'une de l'autre.

La deuxième partie 212 de la coquille supérieure 202 est assemblée solidairement au plateau 209 mobile selon la direction repérée par la flèche Z, tandis que la première partie 213 de la même coquille supérieure est assemblée avec la deuxième partie 213 à l'aide de moyens de liaison autorisant uniquement la rotation de ladite première partie par rapport à la deuxième partie sous l'action d'efforts orientés circonférentiellement et s'exerçant sur la première partie de coquille (l'axe de rotation de ladite partie est parallèle à la direction Z).

La coquille inférieure 201 est fixée à la base 208 par la deuxième partie de coquille 210, alors que la première partie 211 est liée à la deuxième partie 210 par des moyens de fixation autorisant la rotation de ladite deuxième partie par rapport à ladite première sous l'action d'efforts dirigés circonférentiellement et s'exerçant sur ladite deuxième partie de coquille.

De façon à mouler des motifs de sculpture sous la surface de roulement d'une bande de roulement d'un pneumatique, les parties de coquille 211, 213, mobiles circonférentiellement, sont pourvues d'une pluralité d'éléments de relief 214, 215 faisant saillie sur la surface de moulage desdites parties pour mouler radialement sous et dans ladite bande une pluralité de motifs dont le démoulage s'effectue ensuite latéralement et non pas radialement comme c'est le cas des motifs moulés par les éléments de relief portés par les garnitures 216 des secteurs formant la couronne sommet 203.

Par latéralement, on entend que les éléments de relief en saillie sur la surface de moulage de la coquille supérieure sont démoulés, c'est à dire extraits de la bande de roulement, en déplaçant le plateau supérieur 209 dans une direction parallèle à la flèche Z (parallèle à l'axe de rotation du pneumatique) de façon à entraîner avec lui la coquille supérieure 202 et avec elle lesdits éléments de relief 214.

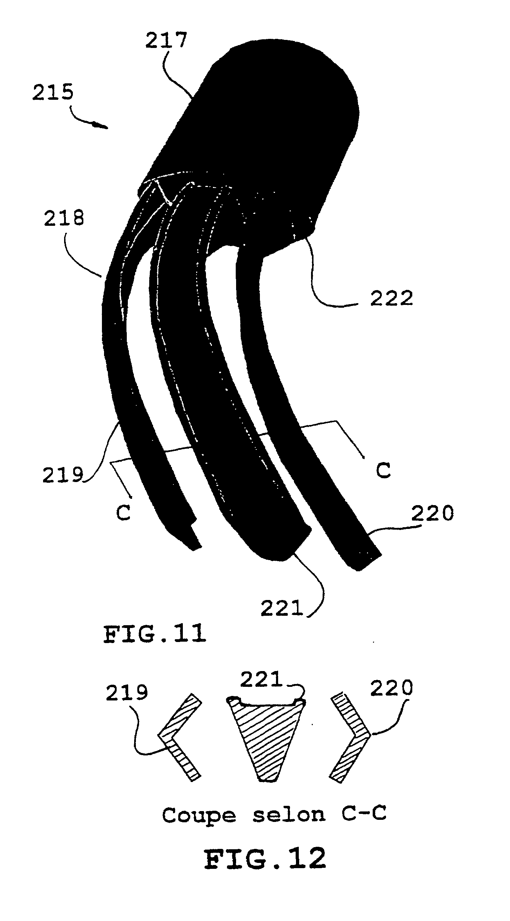

Un exemple de réalisation d'un élément de relief porté par une partie de coquille est présenté à la figure 11. Sur cette figure, on voit, en perspective, un élément de relief 215 composé d'une partie de support 217 destinée à assurer l'ancrage dudit élément sur la partie de coquille correspondante et d'une partie 218 dans le prolongement de la partie de support 217 et faisant saillie sur la surface de moulage de la coquille pour mouler plusieurs motifs dans une bande de roulement. La partie 218 faisant saillie sur la surface de moulage de la coquille est constituée de trois "doigts" 219, 220, 221 sensiblement de même longueur et disposés parallèlement les uns par rapport aux autres de façon à mouler un canal et de part et d'autre deux incisions; dans la position de moulage, les motifs moulés avec l'élément de relief ont des projections radiales sur la surface de roulement du pneumatique neuf dont les tracés moyens courbes ont des orientations faisant sensiblement un même angle différent de 0° avec la direction transversale.

Vus suivant une direction radiale lorsqu'ils sont dans la position de moulage, les trois doigts d'un même élément de relief suivent une géométrie courbe, tandis que leur section droite va progressivement en décroissant en allant de la partie support 217 constituant l'ancrage des doigts 219, 220, 221 vers l'extrémité opposée desdits doigts, de façon à suivre sensiblement le profil méridien de l'armature sommet du pneumatique.

Le doigt 221 en position médiane a une section en forme de V et de largeur maximale 5 mm pour mouler un canal tandis que les deux autres doigts 219, 220 de part et d'autre du doigt médian 221 ont en section transversale une forme en zigzag pour mouler des incisions minces d'épaisseur 2 mm (voir la figure 12 montrant une coupe selon la ligne C-C réalisée sur la figure 11).

Pour pouvoir mouler des sculptures différentes avec les mêmes coquilles, il est judicieux de prévoir des moyens de liaison entre chacun desdits éléments de relief et la partie de coquille mobile en rotation, permettant la fixation et le remplacement aisé d'au moins un desdits éléments de relief.

Une fois l'ébauche de pneumatique non vulcanisée et non moulée introduite dans le moule 200, ce dernier est progressivement fermé de manière à présenter une surface de moulage sur laquelle font saillie les éléments de relief portés par les garnitures sommet 216 de la couronne 203 et ceux portés par les coquilles 201, 202. Après fermeture complète du moule, des moyens de gonflage internes à l'ébauche permettent d'appliquer ladite ébauche contre les surfaces de moulage tout en enrobant les éléments de relief pour former les motifs constituant la sculpture du pneumatique.

Après moulage et vulcanisation du pneumatique, on procède au démoulage de la façon suivante :
- écartement radial des secteurs de la couronne 203 pour démouler le sommet du pneumatique et extraire radialement de la bande de roulement les éléments de relief des garnitures;
- écartement axial (suivant la direction Z) de la coquille supérieure 202 par rapport à la coquille inférieure 201 en déplaçant le plateau supérieur 209 de façon à démouler les flancs du pneumatique et à extraire les éléments de relief 214, 215 portés par les coquilles. Dans ce mouvement, la matière élastomérique constituant les flancs se déforme élastiquement sous l'action des efforts de démoulage pour permettre la libération desdits éléments de relief; d'autre part, compte tenu de la géométrie des éléments de relief 214, 215, la matière élastomérique entourant lesdits éléments de relief s'oppose au démoulage desdits éléments de relief et exerce sur ceux-ci des efforts de réaction dont une composante est orientée circonférentiellement. Cette composante d'effort circonférentiel est précisément utilisée pour faire tourner la partie de coquille 213 portant les éléments de relief 214 par rapport à l'autre partie de coquille 212, fixe en rotation, de la même coquille 202, de manière à faciliter le démoulage desdits éléments de relief 214. Dans le même temps, le déplacement du plateau supérieur 209 entraîne avec lui l'enveloppe de pneumatique qui exerce un effort de démoulage sur la coquille inférieure 201 (suivant la direction Z), ce qui provoque aussi le démoulage des éléments de relief 215 de ladite coquille inférieure par rotation de la partie 211 par rapport à la partie 210.

Pour obtenir un effet efficace de rotation d'une partie d'une coquille par rapport à l'autre partie d'une même coquille pendant le démoulage, il est nécessaire que tous les éléments de relief portés par ladite coquille aient quasiment la même orientation par rapport à la direction axiale de façon à ce qu'ils provoquent tous une composante d'effort circonférentiel de même sens pendant le démoulage; toutefois, les éléments de relief portés par les coquilles supérieure et inférieure peuvent avoir des orientations de signes opposés (c'est d'ailleurs le cas pour la sculpture présentée aux figures 1 et 2).

De manière avantageuse, il est prévu des moyens de rappel élastiques entre les différentes parties d'une même coquille assurant, après démoulage, le retour de chaque partie mobile de coquille dans la position de moulage.

Pour faciliter le démoulage, les éléments de relief peuvent être revêtus d'une couche mince, pouvant être renouvelée si nécessaire, d'un matériau présentant un faible coefficient d'adhérence avec la matière élastomérique composant la bande de roulement. Un matériau à base de Téflon® et de silicone, comme le Xylan®, est particulièrement bien adapté à cet usage.

Les éléments de relief 214, 215 portés par les coquilles sont réalisés par usinage, par fonderie d'alliage métallique ou encore par injection d'un matériau thermodurcissable.

Avantageusement, les doigts constituant les éléments de relief sont réalisés dans un matériau qui présente une très faible rémanence à la déformation subie pendant le moulage sous l'action des poussées exercées par la matière élastomérique moulée, de façon à assurer après chaque moulage le retour à la géométrie initiale des doigts de moulage.

De manière avantageuse, les éléments de relief d'une même coquille peuvent avoir des longueurs suffisantes pour affecter la totalité ou la quasi totalité de la largeur de la bande de roulement moulée.

De façon à obtenir une cavité sous la surface de roulement d'une bande de roulement présentant la particularité d'être orientée, au moins sur une grande partie, selon une direction proche ou égale à la direction circonférentielle, il est possible d'employer un moule selon l'invention comportant une coquille dont une partie mobile est pourvue d'au moins un doigt de moulage s'étendant, sur une plus ou moins grande longueur, principalement dans une direction voisine de la direction circonférentielle; il est possible d'envisager selon ce même principe de réaliser un canal faisant un tour complet du pneumatique voire même plusieurs tours; dans ce cas, il peut être nécessaire d'adjoindre audit moule des moyens mécaniques d'entraînement permettant de mettre en rotation la partie mobile de coquille afin de faciliter la rotation et l'extraction du/des doigts et ainsi de permettre le démoulage.

Ces mêmes moyens additionnels d'entraînement peuvent également être employés pour faire pénétrer les éléments de relief dans la gomme au moment du moulage.

Une autre mesure intéressante consiste à prévoir des logements dans les éléments de relief portés par la couronne pour mouler des rainures dans la bande de roulement, chaque logement étant destiné à recevoir, quand le moule est fermé, au moins un doigt porté par l'une ou l'autre des coquilles, de manière à assurer un bon placement dudit doigt pendant le moulage tout en rigidifiant mécaniquement cet élément pour lui permettre de mieux résister aux efforts de poussée exercés par la matière moulée pendant la phase de poussée contre la surface de moulage du moule, correspondant au moulage.

Les dispositions qui ont été décrites pour un moule à secteur s'appliquent de la même manière à d'autres méthodes de moulage, dès lors qu'il existe des parties de moule pour mouler les flancs du pneumatique. En particulier, elles s'appliquent au moule de moulage d'un pneumatique décrit dans la demande de brevet FR 2 691 095.

Un pneumatique moulé dans un moule comportant des éléments de relief sur au moins une de ses coquilles pour mouler des motifs de cavité sous la surface de roulement à l'état neuf, peut présenter sur les bords extérieurs de sa bande de roulement une empreinte des faces 222 des parties 217 formant support desdits éléments de relief (voir figure 11); cette empreinte peut être en creux ou en relief, voire en alternance en creux et en relief.

Le moule qui vient d'être décrit permet de réaliser, de manière aisée et à moindre prix, des sculptures conformes à l'invention comme, par exemple, celles représentées aux figures 1 à 9.

## Revendications

1. Bande de roulement d'épaisseur E pour pneumatique, ladite bande présentant une surface de roulement (1), limitée transversalement par des bords latéraux, ladite bande étant pourvue à l'état neuf d'une sculpture comportant au moins une pluralité de blocs de gomme (9, 11) disposés circonférentiellement sur au moins un de ses bords latéraux, lesdits blocs de gomme (9, 11) étant séparés les uns des autres par des rainures orientées quasiment transversalement (10, 12) et séparés des motifs de sculpture (15, 16) situés axialement à l'intérieur par des rainures (6, 7, 8) orientées principalement circonférentiellement, la bande de roulement étant **caractérisée en ce qu'**elle comporte sur au moins un de ses bords comportant une pluralité de blocs de gomme (9, 11) à l'état neuf et radialement à l'intérieur de chacun desdits blocs :
- au moins un canal (26) de largeur moyenne au moins égale à la largeur des rainures transversales (10, 12), chaque canal ayant un tracé moyen identique au tracé moyen desdites rainures transversales et étant destiné à former une rainure (101, 121) débouchant radialement vers l'extérieur de la bande de roulement après une usure de la bande de roulement comprise entre 15% et 45% de l'épaisseur E de ladite bande, chaque canal (26) s'étendant dans l'épaisseur restante de la bande, et
- au moins une incision (27, 28) ayant, en projection radiale sur la surface de roulement de la bande à l'état neuf, une orientation transversale identique ou quasiment identique à celle du (des) canal (canaux) (26) projeté sur la même surface et de largeur faible devant la largeur moyenne de chaque canal, chaque incision débouchant radialement à la surface de roulement au plus tard au moment de l'apparition d'un canal sur ladite surface de roulement et s'étendant dans l'épaisseur de la bande sur toute la profondeur du (des) canal (canaux).

2. Bande de roulement selon la revendication 1 **caractérisée en ce que** les orientations moyennes de chaque canal (26) et incisions (27, 28) en projection sur la surface de roulement (1) font des angles différents de zéro avec les orientations des rainures (10, 12) présentes sur la même surface de roulement à l'état neuf.

3. Bande de roulement selon la revendication 1 ou la revendication 2 **caractérisée en ce que** sont définis, radialement sous la surface de roulement à l'état neuf, plusieurs niveaux successifs correspondants à des niveaux d'usure partielle de la bande de roulement, chaque niveau étant défini par sa distance mesurée par rapport à la surface de roulement à l'état neuf, un premier niveau étant situé à une distance H1 comprise entre 15% et 45% de l'épaisseur E de ladite bande et les niveaux suivants étant situés à des distances strictement supérieures à H1, et **en ce que** pour chaque niveau d'usure, débouchent sur la surface de roulement :
- au moins un canal (73, 74, 75, 83, 86) de largeur moyenne au moins égale à la largeur des rainures transversales (71, 81), ledit canal ayant un tracé moyen identique au tracé moyen desdites rainures transversales, et
- au moins une incision (77, 78, 79, 84, 85) de tracé moyen identique au tracé moyen desdits canaux et de largeur faible devant la largeur moyenne desdits canaux, ladite incision ne débouchant pas à la surface de roulement (1) de la bande à l'état neuf.

4. Bande de roulement pour pneumatique selon l'une des revendications 1 à 3 **caractérisée en ce qu'**au moins une incision (27, 28, 39, 39', 65, 77, 78, 84, 85) située radialement sous la surface de roulement est une incision dont la section droite est formée d'une succession de lignes brisées ou d'ondulations.

5. Bande de roulement pour pneumatique selon l'une quelconque des revendications 1 à 4 **caractérisée en ce qu'**elle comporte dans au moins un bloc de gomme du bord de la bande au moins une incision (45) en forme de Y s'étendant radialement vers l'intérieur à partir de la surface de roulement et se prolongeant par deux branches (43, 44) situées de part et d'autre d'un canal (42) destiné à former une rainure divisant ledit bloc en deux blocs après usure partielle.

6. Bande de roulement pour pneumatique selon l'une quelconque des revendications 1 à 5 **caractérisée en ce que** l'un au moins des canaux (26) sous la surface de roulement de la bande de roulement a, vu en coupe, un contour (25) présentant au moins deux parties de contour (29, 30) séparées d'une distance au moins égale à la moitié de la largeur maximale dudit canal, lesdites parties (29, 30) étant situées radialement sous la surface de roulement à des distances inférieures aux distances des autres points dudit contour.

7. Moule (200) de moulage d'un pneumatique pourvu d'une bande de roulement se prolongeant axialement par des flancs jusqu'aux zones de bourrelet, ledit moule comportant deux coquilles (201, 202) pourvues de surfaces de moulage pour mouler chacune un flanc de pneumatique et une structure formant une couronne (203) concentrique aux deux coquilles (201, 202) pour mouler la bande de roulement du pneumatique, ladite couronne (203) et les coquilles (201, 202) étant, dans la position de fermeture du moule, en contact par leurs extrémités latérales, ledit moule étant **caractérisé en ce que** :
- au moins une coquille (201, 202) est formée d'au moins deux parties de coquille (210, 211 et 212, 213) annulaires et concentriques les unes par rapport aux autres de façon que les surfaces de moulage desdites parties soient, dans la configuration de moulage, dans le prolongement l'une de l'autre pour mouler la totalité d'un flanc,
- au moins une des parties de coquille est pourvue d'au moins une pluralité d'éléments de relief (214, 215) faisant saillie sur la surface de moulage de ladite partie de coquille, lesdits éléments de relief (214, 215) d'une même partie de coquille ayant quasiment la même géométrie et la même orientation définie comme la direction entre le point d'ancrage d'un élément sur la partie de coquille et l'extrémité dudit élément axialement la plus à l'extérieur de ladite partie de coquille,
- chacune des parties de coquille portant des éléments de relief est mobile dans la direction circonférentielle par rapport aux autres parties (210 ou 212) de la même coquille, de façon à permettre la rotation de chacune desdites parties par rapport aux autres parties de la même coquille au moins sous l'action des efforts exercés par les mélanges de caoutchouc sur les éléments de relief (214, 215) pendant le démoulage, dans le but de faciliter le démoulage du pneumatique.

8. Moule (200) selon la revendication 7 **caractérisé en ce qu'**au moins une coquille est formée de deux parties de coquille annulaires et concentriques, l'une desdites parties étant montée mobile en rotation dans la direction circonférentielle par rapport à l'autre partie de coquille et **en ce que** la partie de coquille mobile en rotation porte au moins un élément de relief s'étendant en grande partie dans une direction voisine de la direction circonférentielle.

9. Moule (200) selon l'une des revendications 7 ou 8 **caractérisé en ce qu'**il est en outre prévu des moyens additionnels pour faire tourner chaque partie mobile de coquille pendant la phase de démoulage.

10. Moule (200) selon l'une des revendication 7 à 9 **caractérisé en ce qu'**il est prévu des moyens de rappel élastiques entre la première partie de coquille (211, 213) et la deuxième partie de coquille (210, 212) d'une même coquille pour assurer une bonne position desdites parties l'une par rapport à l'autre avant chaque opération de moulage.

11. Moule (200) selon l'une des revendications 7 à 10 **caractérisé en ce que**, en configuration de moulage, les éléments de relief (214, 215) portés par au moins une coquille sont en appui sur des éléments de relief portés par les garnitures (216) moulant la bande de roulement du pneumatique de façon à résister aux efforts de flexion imposés par la mise en place de la matière élastomérique pendant l'opération de moulage.

12. Moule (200) selon l'une des revendications 7 à 11 **caractérisé en ce que** les éléments de relief (214, 215) portés par au moins une coquille sont réalisés dans un alliage métallique ayant une caractéristique de rémanence appropriée pour retrouver et conserver une forme initiale prédéterminée, indépendamment du nombre de moulages réalisés.

13. Moule (200) selon l'une des revendications 7 à 12 **caractérisé en ce que** les éléments de relief (214, 215) portés par au moins une coquille sont composés chacun d'au moins deux doigts (219, 220, 221) s'étendant sensiblement parallèlement l'un par rapport à l'autre, l'un au moins desdits doigts ayant une section droite d'une largeur moyenne supérieure à la largeur moyenne des autres doigts, et **en ce que** l'un au moins des autres doigts a la forme d'une lame mince suivant un profil formé d'une succession de lignes brisées ou d'ondulations.

14. Moule (200) selon l'une des revendications 7 à 13 **caractérisé en ce que** la première partie de coquille (213, 211) pourvue d'une pluralité d'éléments de relief(214, 215) comporte des moyens de liaison entre chacun desdits éléments de relief et ladite première partie qui permettent la fixation et le remplacement d'au moins un desdits éléments de relief de façon aisée.

## Patentansprüche

1. Laufband einer Stärke E für Luftreifen, wobei das Band eine Lauffläche (1) aufweist, die in Querrichtung durch Seitenränder begrenzt wird, wobei das Band im Neuzustand mit einem Profil versehen ist, das mindestens mehrere Gummiblöcke (9, 11) aufweist, die in Umfangsrichtung an mindestens einem seiner Seitenränder angeordnet sind, wobei die Gummiblöcke (9, 11) voneinander durch Rillen (10, 12) getrennt werden, die praktisch quer ausgerichtet und von den axial innen angeordneten Profilmustern (15, 16) durch hauptsächlich in Umfangsrichtung ausgerichtete Rillen (6, 7, 8) getrennt sind, wobei das Laufband **dadurch gekennzeichnet ist, daß** es an mindestens einem seiner Ränder, der im Neuzustand mehrere Gummiblöcke (9, 11) aufweist, und radial innerhalb jedes dieser Blöcke, aufweist:
- mindestens einen Kanal (26) einer mittleren Breite mindestens gleich der Breite der Querrillen (10, 12), wobei jeder Kanal einen mittleren Verlauf gleich dem mittleren Verlauf der Querrillen hat und dazu bestimmt ist, eine Rille (101, 121) zu bilden, die nach einer Abnutzung des Laufbands, die zwischen 15% und 45% der Stärke E des Bands liegt, radial nach außerhalb des Laufbands mündet, wobei jeder Kanal (26) sich in der verbleibenden Stärke des Bands erstreckt, und
- mindestens einen Einschnitt (27, 28), der in radialer Projektion auf die Lauffläche des Bandes im Neuzustand eine mittlere Querausrichtung gleich oder praktisch gleich derjenigen des Kanals/der Kanäle (26) hat, der/die auf die gleiche Fläche projiziert ist/sind, und von geringer Breite im Vergleich mit der mittleren Breite jedes Kanals ist, wobei jeder Einschnitt spätestens zum Zeitpunkt des Auftretens eines Kanals an der Lauffläche radial an der Lauffläche mündet und sich in der Stärke des Bandes über die ganze Tiefe des Kanals/der Kanäle erstreckt.

2. Laufband nach Anspruch 1, **dadurch gekennzeichnet, daß** die mittleren Ausrichtungen jedes Kanals (26) und der Einschnitte (27, 28) in Projektion auf die Lauffläche (1) Winkel ungleich Null mit den Ausrichtungen der Rillen (10, 12) bilden, die auf der gleichen Lauffläche im Neuzustand vorhanden sind.

3. Laufband nach Anspruch 1 oder Anspruch 2, **dadurch gekennzeichnet, daß** radial unter der Lauffläche im Neuzustand mehrere aufeinanderfolgende Höhen definiert werden, die Höhen einer teilweisen Abnutzung des Laufbands entsprechen, wobei jede Höhe durch ihren Abstand gemessen in bezug auf die Lauffläche im Neuzustand definiert wird, wobei eine erste Höhe sich in einem Abstand H1 zwischen 15% und 45% der Stärke E des Bands befindet, und die folgenden Höhen sich in Abständen unbedingt größer als H1 befinden, und daß für jede Abnutzungshöhe an der Lauffläche münden:
- mindestens ein Kanal (73, 74, 75, 83, 86) einer mittleren Breite mindestens gleich der Breite der Querrillen (71, 81), wobei der Kanal einen mittleren Verlauf gleich dem mittleren Verlauf der Querrillen hat, und
- mindestens ein Einschnitt (77, 78, 79, 84, 85) eines mittleren Verlaufs gleich dem mittleren Verlauf der Kanäle und von geringer Breite im Vergleich mit der mittleren Breite der Kanäle, wobei der Einschnitt nicht an der Lauffläche (1) des Bands im Neuzustand mündet.

4. Laufband für Luftreifen nach einem der Ansprüche 1 bis 3, **dadurch gekennzeichnet, daß** mindestens ein radial unter der Lauffläche befindlicher Einschnitt (27, 28, 39, 39', 65, 77, 78, 84, 85) ein Einschnitt ist, dessen Querschnitt von einer Folge von gekrümmten Linien oder Wellenlinien gebildet wird.

5. Laufband für Luftreifen nach einem der Ansprüche 1 bis 4, **dadurch gekennzeichnet, daß** es in mindestens einem Gummiblock des Rands des Bands mindestens einen Y-förmigen Einschnitt (45) aufweist, der sich ausgehend von der Lauffläche radial nach innen erstreckt und sich in zwei Zweigen (43, 44) verlängert, die sich zu beiden Seiten eines Kanals (42) befinden, der dazu bestimmt ist, eine Rille zu bilden, die nach teilweiser Abnutzung diesen Block in zwei Blöcke teilt.

6. Laufband für Luftreifen nach einem der Ansprüche 1 bis 5, **dadurch gekennzeichnet, daß** mindestens einer der Kanäle (26) unter der Lauffläche des Laufbands im Schnitt gesehen einen Umriß (25) hat, der mindestens zwei Umrißbereiche (29, 30) aufweist, die durch einen Abstand mindestens gleich der Hälfte der maximalen Breite des Kanals getrennt sind, wobei die Bereiche (29, 30) sich radial unter der Lauffläche in kleineren Abständen als die Abstände der anderen Punkte des Umrisses befinden.

7. Form (200) zum Formen eines Luftreifens mit einem Laufband, das sich axial bis zu den Wulstzonen durch Flanken verlängert, wobei die Form zwei Schalen (201, 202), die mit Formflächen versehen sind, um je eine Luftreifenflanke zu formen, und eine Struktur aufweist, die einen zu den beiden Schalen (201, 202) konzentrischen Kranz (203) bildet, um das Laufband des Luftreifens zu formen, wobei der Kranz (203) und die Schalen (201, 202) in der Schließstellung der Form über ihre seitlichen Enden in Kontakt stehen, wobei die Form **dadurch gekennzeichnet ist, daß**
- mindestens eine Schale (201, 202) aus mindestens zwei ringförmigen und zueinander konzentrischen Schalenteilen (210, 211 und 212, 213) gebildet wird, so daß die Formflächen dieser Teile sich in der Formgestaltung in der gegenseitigen Verlängerung befinden, um die Gesamtheit einer Flanke zu formen,
- mindestens eines der Schalenteile mit mindestens mehreren Reliefelementen (214, 215) versehen ist, die auf der Formfläche dieses Schalenteils vorstehen, wobei die Reliefelemente (214, 215) eines gleichen Schalenteils praktisch die gleiche Geometrie und die gleiche Ausrichtung haben, die als Richtung zwischen dem Verankerungspunkt eines Elements auf dem Schalenteil und dem Ende des Elements definiert ist, das axial am weitesten außerhalb des Schalenteils liegt,
- jedes der Reliefelemente tragenden Schalenteile in bezug auf die anderen Teile (210 oder 212) der gleichen Schale in Umfangsrichtung beweglich ist, um die Drehung jedes dieser Teile in bezug auf die anderen Teile der gleichen Schale zumindest unter Einwirkung der Kräfte zu erlauben, die von den Kautschukmischungen während des Ausformens auf die Reliefelemente (214, 215) ausgeübt werden, um das Ausformen des Luftreifens zu erleichtern.

8. Form (200) nach Anspruch 7, **dadurch gekennzeichnet, daß** mindestens eine Schale aus zwei ringförmigen und konzentrischen Schalenteilen gebildet wird, wobei eines der Teile in Umfangsrichtung drehbeweglich in bezug auf das andere Schalenteil montiert ist, und daß das drehbewegliche Schalenteil mindestens ein Reliefelement trägt, das sich zum großen Teil in einer Richtung nahe der Umfangsrichtung erstreckt.

9. Form (200) nach einem der Ansprüche 7 oder 8, **dadurch gekennzeichnet, daß** außerdem zusätzliche Mittel vorgesehen sind, um jedes bewegliche Schalenteil während der Ausformungsphase zu drehen.

10. Form (200) nach einem der Ansprüche 7 bis 9, **dadurch gekennzeichnet, daß** elastische Rückholmittel zwischen dem ersten Schalenteil (211, 213) und dem zweiten Schalenteil (210, 212) einer gleichen Schale vorgesehen sind, um vor jedem Formvorgang eine gute Position der Teile zueinander zu gewährleisten.

11. Form (200) nach einem der Ansprüche 7 bis 10, **dadurch gekennzeichnet, daß** in der Formgestaltung die Reliefelemente (214, 215), die von mindestens einer Schale getragen werden, auf von den Aufsätzen (216) getragenen Reliefelementen aufliegen, die das Laufband des Luftbands formen, um den Biegekräften zu widerstehen, die von dem Einsetzen des Elastomermaterials während des Formvorgangs aufgezwungen werden.

12. Form (200) nach einem der Ansprüche 7 bis 11, **dadurch gekennzeichnet, daß** die von mindestens einer Schale getragenen Reliefelemente (214, 215) aus einer Metallegierung hergestellt sind, die eine geeignete Eigenschaft der bleibenden Verformung aufweist, um eine vorbestimmte Ursprungsform wiederzufinden und zu behalten, unabhängig von der Anzahl der durchgeführten Formvorgänge.

13. Form (200) nach einem der Ansprüche 7 bis 12, **dadurch gekennzeichnet, daß** die von mindestens einer Schale getragenen Reliefelemente (214, 215) je aus mindestens zwei Fingern (219, 220, 221) bestehen, die sich im wesentlichen parallel zueinander erstrecken, wobei mindestens einer der Finger einen Querschnitt einer mittleren Breite größer als die mittlere Breite der anderen Finger hat, und daß mindestens einer der anderen Finger die Form einer dünnen Lamelle gemäß einem Profil hat, das von einer Folge von gekrümmten Linien oder Wellenlinien gebildet wird.

14. Form (200) nach einem der Ansprüche 7 bis 13, **dadurch gekennzeichnet, daß** das mit mehreren Reliefelementen (214, 215) versehene erste Schalenteil (213, 211) Verbindungsmittel zwischen jedem der Reliefelemente und dem ersten Teil aufweist, die die Befestigung und das Auswechseln mindestens eines der Reliefelemente auf bequeme Weise ermöglichen.

## Claims

1. A tread of thickness E for a tyre, said tread having a running surface (1), limited transversely by lateral edges, said tread being provided when new with a tread pattern comprising at least a plurality of rubber blocks (9, 11) arranged circumferentially on at least one of its lateral edges, said rubber blocks (9, 11) being separated from each other by grooves (10, 12) oriented virtually transversely and separated from the tread pattern motifs (15, 16) located axially to the inside by grooves (6, 7, 8) oriented mainly circumferentially, the tread being **characterised in that** it comprises on at least one of its edges comprising a plurality of rubber blocks (9, 11) when new and radially to the inside of each of said blocks:
- at least one channel (26) of average width at least equal to the width of the transverse grooves (10, 12), each channel having an average trace identical to the average trace of said transverse grooves and being intended to form a groove (101, 121) opening radially towards the outside of the tread after wear of the tread of between 15% and 45% of the thickness E of said tread, each channel (26) extending within the remaining thickness of the tread, and
- at least one incision (27, 28) having, in radial projection on the running surface of the tread when new, a transverse orientation identical or virtually identical to that of the channel(s) (26) projected on the same surface and of low width compared with the average width of each channel, each incision opening radially on to the running surface at the latest at the time of the appearance of a channel on said running surface and extending within the thickness of the tread over the entire depth of the channel(s).

2. A tread according to Claim 1, **characterised in that** the average orientations of each channel (26) and incisions (27, 28) in projection on the running surface (1) form angles other than zero with the orientations of the grooves (10, 12) present on the same running surface when new.

3. A tread according to Claim 1 or Claim 2, **characterised in that** there are defined, radially beneath the running surface when new, several successive layers corresponding to levels of partial wear of the tread, each level being defined by its distance measured relative to the running surface when new, a first level being located at a distance H1 of between 15% and 45% of the thickness E of said tread and the following levels being located at distances strictly greater than H1, and **in that** for each level of wear, opening on to the running surface:
- at least one channel (73, 74, 75, 83, 86) of average width at least equal to the width of the transverse grooves (71, 81), said channel having an average trace identical to the average trace of said transverse grooves, and
- at least one incision (77, 78, 79, 84, 85) having an average trace identical to the average trace of said channels and of low width compared with the average width of said channels, said incision not opening on to the running surface (1) of the tread when new.

4. A tread for a tyre according to one of Claims 1 to 3, **characterised in that** at least one incision (27, 28, 39, 39', 65, 77, 78, 84, 85) located radially beneath the running surface is an incision, the cross-section of which is formed of a succession of broken lines or of undulations.

5. A tread for a tyre according to any one of Claims 1 to 4, **characterised in that** it comprises within at least one rubber block of the edge of the tread at least one Y-shaped incision (45) extending radially towards the inside from the running surface and extending via two branches (43, 44) located on either side of a channel (42) intended to form a groove dividing said block into two blocks after partial wear.

6. A tread for a tyre according to any one of Claims 1 to 5, **characterised in that** at least one of the channels (26) beneath the running surface of the tread, when viewed in section, has a contour (25) having at least two contour parts (29, 30) spaced apart by a distance at least equal to half the maximum width of said channel, said parts (29, 30) being located radially beneath the running surface at distances less than the distances of the other points of said contour.

7. A mould (200) for moulding a tyre provided with a tread extending axially via sidewalls as far as the bead zones, said mould comprising two shells (201, 202) provided with moulding surfaces each for moulding a tyre sidewall and a structure forming a ring (203) concentric to the two shells (201, 202) for moulding the tread of the tyre, said ring (203) and the shells (201, 202), in the closed position of the mould, being in contact via their lateral ends, said mould being **characterised in that**:
- at least one shell (201, 202) is formed of at least two annular shell parts (210, 211 and 212, 213) concentric to each other, such that the moulding surfaces of said parts, in the moulding configuration, are in the extension one of the other for moulding an entire sidewall,
- at least one of the shell parts is provided with at least a plurality of elements in relief (214, 215) projecting onto the moulding surface of said shell part, said elements in relief (214, 215) of the same shell part having virtually the same geometry and the same orientation defined as being the direction between the point of anchoring of an element on the shell part and the end of said axially outermost element of said shell part,
- each of the shell parts bearing elements in relief is mobile in the circumferential direction relative to the other parts (210 or 212) of the same shell, so as to permit the rotation of each of said parts relative to the other parts of the same shell at least under the action of the forces exerted by the rubber mixes on the elements in relief (214, 215) during demoulding, with the aim of facilitating the demoulding of the tyre.

8. A mould (200) according to Claim 7, **characterised in that** at least one shell is formed of two annular shell parts concentric to each other, one of said parts being mounted to be mobile in rotation in the circumferential direction relative to the other shell part, and **in that** the shell part which is mobile in rotation bears at least one element in relief extending to a great extent in a direction close to the circumferential direction.

9. A mould (200) according to one of Claims 7 or 8, **characterised in that** there are furthermore provided additional means for rotating each mobile shell part during the demoulding phase.

10. A mould (200) according to one of Claims 7 to 9, **characterised in that** there are provided elastic return means between the first shell part (211, 213) and the second shell part (210, 212) of the same shell to ensure good positioning of said parts relative to each other before each moulding operation.

11. A mould (200) according to one of Claims 7 to 10, **characterised in that**, in the moulding configuration, the elements in relief (214, 215) borne by at least one shell bear on elements in relief borne by the fittings (216) moulding the tread of the tyre so as to resist the bending stresses imposed by the putting in place of the elastomeric material during the moulding operation.

12. A mould (200) according to one of Claims 7 to 11, **characterised in that** the elements in relief (214, 215) borne by at least one shell are made of a metal alloy having a remanence characteristic appropriate for finding and maintaining a predetermined initial form, independently of the number of mouldings effected.

13. A mould (200) according to one of Claims 7 to 12, **characterised in that** the elements in relief (214, 215) borne by at least one shell are each made of at least two fingers (219, 220, 221) extending substantially parallel to each other, at least one of said fingers having a cross-section of an average width greater than the average width of the other fingers, and **in that** at least one of the other fingers is in the form of a thin slice in a profile formed by a succession of broken lines or of undulations.

14. A mould (200) according to one of Claims 7 to 13, **characterised in that** the first shell part (213, 211) provided with a plurality of elements in relief (214, 215) comprises connection means between each of said elements in relief and said first part which permit at least one of said elements in relief to be fastened and replaced easily.
